Europäisches Patentamt

European Patent Office

Office européen des brevets

(19)

(11) **EP 1 216 202 B1**

(12) **EUROPÄISCHE PATENTSCHRIFT**

(45) Veröffentlichungstag und Bekanntmachung des Hinweises auf die Patenterteilung:
**07.05.2003 Patentblatt 2003/19**

(51) Int Cl.$^7$: **C01G 45/00**, H01M 4/50

(86) Internationale Anmeldenummer:
**PCT/EP00/06766**

(21) Anmeldenummer: **00954513.8**

(22) Anmeldetag: **15.07.2000**

(87) Internationale Veröffentlichungsnummer:
**WO 01/007367 (01.02.2001 Gazette 2001/05)**

(54) **LITHIUMMANGANOXID ENTHALTENDE LITHIUMINTERKALATIONSVERBINDUNGEN**

LITHIUM INTERCALATION COMPOUNDS CONTAINING LITHIUM MANGANESE OXIDE

COMPOSES D'INSERTION DE LITHIUM CONTENANT DE L'OXYDE DE MANGANESE DE LITHIUM

(84) Benannte Vertragsstaaten:
**AT BE CH CY DE DK ES FI FR GB GR IE IT LI LU MC NL PT SE**

(30) Priorität: **27.07.1999 DE 19935091**

(43) Veröffentlichungstag der Anmeldung:
**26.06.2002 Patentblatt 2002/26**

(73) Patentinhaber: **EMTEC Magnetics GmbH 67059 Ludwigshafen (DE)**

(72) Erfinder: **KORMANN, Claudius D-67105 Schifferstadt (DE)**

(56) Entgegenhaltungen:
**WO-A-96/12676**

• **BATES J B ET AL: "FIVE-VOLT PLATEAU IN LIMN2O4 THIN FILMS" EXTENDED ABSTRACTS,US,ELECTROCHEMICAL SOCIETY. PRINCETON, NEW JERSEY, Bd. 95/2, 1995, Seiten 954-955, XP000553916 ISSN: 0160-4619**
• **CHEMICAL ABSTRACTS, vol. 125, no. 4, 22. Juli 1996 (1996-07-22) Columbus, Ohio, US; abstract no. 43624, JIANG: XP002154665 & J.ELECTROCHEMICAL SOC., Bd. 143, Nr. 5, 1996, Seiten 1591-1598,**

**Beschreibung**

Die Erfindung betrifft verbesserte, Lithiummanganoxid enthaltende Lithiuminterkalationsverbindungen mit Spinellstruktur für Dünnfilmelektroden, ein Verfahren zur deren Herstellung, daraus hergestellte Elektroden sowie sekundäre Lithiumionenbatterien mit Lithiummanganoxid enthaltenden Lithiuminterkalationsverbindungen als aktives Material der positiven Elektrode.

Lithiumionenbatterien können aus einer oder mehreren elektrochemischen Zellen, die elektrochemisch aktive Pigmente enthalten, hergestellt werden. Solche Zellen bestehen typischerweise aus einer Anode (negative Elektrode), einem Separator, einer Kathode (positve Elektrode) und einem Elektrolyt. Batterien mit metallischem Lithium als Anode sind ebenso bekannt wie solche mit Graphit, Koks oder anderen Kohlenstoffpartikeln, die bekanntlich Alkalimetallionen interkalieren können. Weiterhin sind auch Batterien mit anderen Lithiuminterkalationsverbindungen, also Stoffen die Lithium unter Einwirkung eines elektrischen Potentials ein- und auslagern können, bekannt. Der Elektrolyt besteht typischerweise aus einem Lithiumsalz, welches in einem oder mehreren aprotischen, normalerweise organischen Lösungsmitteln gelöst ist. Als weitere Elektrolyte kommen Festelektrolyte in Betracht, welche aus einer polymeren Matrix, die ein ionisch leitfähiges aber elektronisch isolierendes Medium enthält, bestehen. Der Ladungsvorgang wird im allgemeinen so definiert, daß beim Laden die Anode (der Minuspol) Lithiumionen aufnimmt, während die Kathode (der Pluspol) als Quelle von Lithiumionen dient. Zellen mit Lithiummetall als Anode sind üblicherweise beim Zusammenbau geladen.

Zellen mit Graphit oder anderen Kohlenstoff enthaltenden Anoden oder einer anderen zur Aufnahme von Lithiumionen fähigen Wirtssubstanz sind beim Zusammenbau üblicherweise ungeladen. Damit sie als Energiespeicher verwendet werden können, müssen sie gegen eine Lithiumionen enthaltende Interkalationsverbindung, vorzugsweise eine Lithiumoxid enthaltende Interkalationsverbindung, geschaltet und geladen werden. Beim Laden wandern die Lithiumionen von der Interkalationsverbindung zum Graphit oder Kohlenstoff oder einer anderen zur Aufnahme von Lithiumionen fähigen Wirtssubstanz. Danach kann die Zelle wieder entladen werden, wobei das Lithium zurückbewegt wird. Solche wiederaufladbaren Batterien, welche kein metallisches Lithium enthalten, nennt man Lithiumionenbatterien. Beispiele hierfür sind in den US 4 464 447 und US 5 418 090 beschrieben.

In den Kathoden werden bevorzugt $LiCoO_2$, $LiMn_2O_4$ und $LiNiO_2$ als oxidische Materialien eingesetzt. All diese Verbindungen werden auch mit variierten Mengenverhältnissen der Metallionen eingesetzt, um bestimmte Vorteile bei der Ladung oder der Lebensdauer einzustellen. Gelegentlich wird der Sauerstoff ganz oder teilweise durch andere Elemente, z.B. Fluor oder Schwefel ersetzt. Während die Kobaltverbindungen teuer sind, sind die Nickelverbindungen schwierig herzustellen. Demgegenüber sind Manganverbindungen relativ preisgünstig.

Die spezifische Ladung von $LiMn_2O_4$ beträgt theoretisch 148 Milliamperestunden pro Gramm. Durch Variation des Sauerstoffgehalts oder des Verhältnisses von Lithium zu Mangan kann dieser Wert verändert werden. Nach Meinung vieler Fachleute kann jedoch $LiMn_2O_4$ nur etwa 110-120 Milliamperestunden pro Gramm, entsprechend etwa 0,8 mol Lithium pro Formeleinheit, dauerhaft reversibel zyklisieren. Beim $LiNiO_2$ und $LiCoO_2$ können nur etwa 0,5 mol Lithium pro Formeleinheit reversibel zyklisiert werden. Günstiger sieht die Situation bei gemischten Nickeloxiden aus, bei denen ein Teil des Nickels durch Cobalt oder ein anderes Metall, Metalloid oder Übergangsmetall ersetzt ist. Beispielhaft erwähnt sei $Li_1Ni_{0.85}Co_{0.15}O_2$. Die Verwendung der ganzzahligen Koeffizienten 1 für Lithium oder 2 für Sauerstoff dient nur der Vereinfachung der Formelbeschreibung; in der Praxis werden durch beabsichtigte oder unbeabsichtigte Variation der Einsatzstoffmengen auch gebrochene Werte verwendet. Die Erfahrung lehrt, daß die Elemente in weiten - nicht nur geradzahligen - Mengenverhältnissen variiert werden können und dadurch für den Einsatz in Kathoden brauchbare Interkalationsverbindungen erhalten werden. Wesentlich ist, daß die Verbindungen Lithiumionen und genügend zum elektrischen Ladungswechsel fähige Elemente enthalten.

Inzwischen sind viele Verfahren zur Herstellung von Interkalationsverbindungen zur Verwendung in Kathoden beschrieben worden. So wird in der US 4 302 518 die Synthese von $Li_xCo_yO_2$ durch Temperung einer Mischung von Lithiumcarbonat und Cobaltcarbonat bei 900 °C in Luft, gefolgt von zwei weiteren Bränden, dargestellt. Die US 4 507 371 lehrt, daß die Synthese von Lithiuminterkalationsverbindungen mit dem kubischen Ionengitter $(B_2)X_4^{n-}$ durch unterschiedliche Reaktionen gelingt: Festkörperreaktionen aus den pulverförmigen Elementen oder ihren Verbindungen bei hohen Temperaturen, Ionenaustauschmethoden oder chemische oder elektrochemische Titrationstechniken. In der US 4 980 080 ist ein Verfahren zur Herstellung von $LiNi_{1-x}Co_xO_2$ beschrieben, welches die folgenden Schritte umfaßt:

1) Herstellung einer Mischung von Pulvern,

2) Erhitzen der Mischung in Luft bei 600-800 °C

3) optional: Homogenisieren der Brennware und Wiederholung des Pulverbrandes.

Ein naßchemisches Verfahren zur Herstellung eines Lithiummanganoxid-Spinells ist in der DE 19 515 629 beschrieben. Hier wird eine Lithiumverbindung und ein Mangansalz in disperser Phase umgesetzt und getrocknet, worauf der Trockenrückstand einer Abfolge von Mahlungen und Temperungen unterworfen wird. Ein weiteres naßchemisches Syntheseverfahren ist in der US 5 742 070 beschrieben. Es beruht im wesentlichen auf der Herstellung von Lösungen von Lithium, Übergangsmetall und organischen Säuren und Alkoholen, welche anschließend getrocknet, gemahlen und gebrannt werden.

Die PCT-Anmeldung WO 97/37935 beansprucht ein trockenes Herstellverfahren, wobei Mischungen von Manganoxiden und Lithiumverbindungen mit jeweils kontrollierter Partikelgrößenverteilung bei ausgewählten Temperaturen mehrfach gebrannt werden. In der PCT-Anmeldung WO 98/02931 wird ein Verfahren zur Herstellung von Lithiummanganinterkalationsoxiden beschrieben, welches aus der Reaktion von LiOH, $MnO_2$ und mindestens einem polyfunktionellen Alkohol besteht, der eine Temperaturbehandlung folgt. Die bekannten Herstellverfahren von Lithiummanganoxidpigmenten benötigen allerdings entweder kostspielige Rohstoffe wie gut lösliche Manganverbindungen oder aufwendige Verfahrensschritte, um die hohen Anforderungen, die an Lithiummanganoxidpigmente für den Einsatz in Elektroden gestellt werden, zu befriedigen. Insbesondere war ein geeignetes Verfahren zur Herstellung von glatten Lithiummanganoxidpigmenten, die sich für die Anwendung in besonders dünnschichtigen Elektroden eignen, nicht bekannt.

Der vorliegenden Erfindung lag daher die Aufgabe zugrunde, Lithiummanganoxidinterkalationsverbindungen mit Spinellstruktur und mit hoher spezifischer Ladungsdichte bereitzustellen, die sich für den Einsatz in besonders dünnschichtigen Elektroden für sekundäre Lithiumionenhochleistungsbatterien eignen. Eine weitere Aufgabe bestand darin, ein einfaches Verfahren zur Herstellung solcher Lithiummanganoxidinterkalationsverbindungen zur Verfügung zu stellen. Außerdem bestand eine Aufgabe darin, Dünnfilmelektroden bereitzustellen, die sich für den Einsatz in sekundären Lithiumionenhochleistungsbatterien eignen. Eine zusätzliche Aufgabe bestand darin, sekundäre Lithiumionenbatterien zur Verfügung zu stellen, die eine hohe Leistung aufweisen und preisgünstig, umweltfreundlich und sicher sind.

Die erfindungsgemäße Aufgabe wurde gelöst, indem Lithiummanganoxid enthaltende Lithiuminterkalationsverbindungen mit Spinellstruktur für Dünnfilmelektroden zur Verfügung gestellt werden, wobei die Lithiuminterkalationsverbindungen über eine besonders glatte und hochkristalline Morphologie verfügen, eine gemäß der BET-Methode bestimmte spezifische Oberfläche von 0,3 bis 5 m²/g, eine am $d_{50}$-Wert bestimmte Teilchengröße von größer als 0,5 μm, einen am $d_{90}$-Wert bestimmten Durchmesser von 30 μm oder kleiner sowie ein inneres Porenvolumen von kleiner als 0,05 ml/g aufweisen und eine ausgeprägte Kristallstruktur besitzen.

Dabei soll unter dem Begriff Morphologie das Zusammenwirken der Partikeleigenschaften Porosität (Porengröße und -volumen), Teilchengröße (Durchmesser) und spezifische Oberfläche verstanden werden.

Weiterhin wurde gefunden, daß sich derartige Lithiummanganoxidinterkalationsverbindungen mit einem Verfahren herstellen lassen, welches umfaßt:

a) Herstellen eines innigen Gemisches aus einer oder mehreren Lithiumverbindungen und einer oder mehreren Manganverbindungen, wobei mindestens eine dieser Verbindungen oder die Summe aus allen Verbindungen soviel aktiven Sauerstoff enthält, daß die Anzahl der Äquivalente an aktivem Sauerstoff gleich oder größer der Anzahl der Lithiumatome ist, sowie Tempern bei 600°C bis 1000°C in nicht oxidierender Atmosphäre und nachfolgendes Mahlen, wobei eine partikuläre, kristalline Spinellvorläuferverbindung erhalten wird;

b) Tempern der kristallinen Spinellvorläuferverbindung in oxidierender Atmosphäre bei 500°C bis 800 °C mit einer Verweilzeit von 0,5 bis 10 Stunden.

Auch wurde gefunden, daß Dünnfilmelektroden, welche nach dem erfindungsgemäßen Verfahren hergestellte Lithiummanganoxidinterkalationsverbindungen mit Spinellstruktur enthalten, in sekundären Lithiumionenbatterien eine hohe spezifische Ladungsdichte sowie eine hohe Leistung erzielen. Solche Dünnfilmelektroden werden nach an sich bekannten, allgemeinen Verfahren hergestellt, z.B. durch Sprühen, Rakeln und Pressen von Gemischen aus der erfindungsgemäßen Lithiummanganoxidinterkalationsverbindung, Leitpigment und Bindemittel, gegebenenfalls im Gemisch mit geeigneten Lösungsmitteln und weiteren Zusatzstoffen, auf eine metallische, elektrisch leitende dünne Folie oder einen anderen geeigneten Ableiter.

Es wurde weiterhin gefunden, daß sekundäre Lithiumionenbatterien, welche die erfindungsgemäßen Lithiummanganoxidinterkalationsverbindungen als aktives Material der positiven Elektrode enthalten, über eine hohe Leistungsfähigkeit verfügen und gleichzeitig kostengünstig herstellbar, sicher und umweltfreundlich sind.

Solche sekundären Lithiumionenbatterien werden in an sich bekannter Weise hergestellt und bestehen im wesentlichen aus einer positiven Elektrode, einer negativen Elektrode, einem Separator und einem Elektrolyten in einem Gehäuse. Für die erfindungsgemäßen sekundären Lithiumionenbatterien werden die erfindungsgemäßen Lithiummanganoxidinterkalationsverbindungen als aktives Material mit einem geeigneten, an sich bekannten Bindemittel in der positiven Elektrode verwendet, während als aktives Material für die negative Elektrode Graphit oder Kohlenstoff oder eine andere zur Aufnahme von Lithiumionen fähige Wirtssubstanz mit einem geeigneten, an sich bekannten Bindemittel eingesetzt wird.

Die erfindungsgemäßen Lithiummanganoxidinterkalationsverbindungen mit Spinellstruktur zeichnen sich durch besonders gute Verarbeitungs- und elektrische Eigenschaften aus. Sie sind für den Einsatz in besonders dünnschichtigen Elektroden geeignet. Die spezifische Oberfläche der erfindungsgemäßen Lithiummanganoxidinterkalationsverbindungen liegt im Bereich von 0,3-5 $m^2$/g, bevorzugt von 0,5-1,9 $m^2$/g und ganz bevorzugt von 0,6-1,5 $m^2$/g. Die Teilchengröße, gemessen am $d_{50}$-Wert, ist größer als 0,5 μm, bevorzugt größer als 1 μm. Der Durchmesser der Teilchen ist zweckmäßigerweise nicht größer als $d_{90}$ = 30 μm, bevorzugt kleiner als $d_{90}$ = 25 μm, ganz bevorzugt kleiner als $d_{90}$ = 20 μm. Die Teilchen sind im wesentlichen frei von inneren Poren. Dabei sind innere Poren folgendermaßen definiert: Die Größe der inneren Poren $d_{innere}$ hängt von der Partikelgröße $d_{50}$ ab. Innere Poren sind stets gleichgroß oder kleiner als ein Viertel der Partikelgröße $d_{50}$ und sind gleichgroß oder größer als 0,01 μm. Damit ergibt sich für den Größenbereich der inneren Poren folgender Zusammenhang:

$$0,01 \text{ μm} \leq d_{innere} \leq d_{50}/4.$$

Das innere Porenvolumen ist das kumulierte Porenvolumen von Poren in diesem Größenbereich. Die erfindungsgemäßen Lithiummanganoxidteilchen sind besonders glatt und. haben ein geringes inneres Porenvolumen von weniger als 0,05 ml/g und bevorzugt von weniger als 0,03 ml/g.

Außerdem sind die erfindungsgemäßen Lithiummanganoxidinterkalationsverbindungen sehr kristallin, was an sehr scharfen Beugungsreflexen der Diffraktogramme erkannt wird. Scharfe Beugungsreflexe entstehen im allgemeinen bei großen Kristallitgrößen.

Das erfindungsgemäße Verfahren zur Herstellung von Lithiummanganoxidinterkalationsverbindungen mit Spinellstruktur besteht mindestens aus zwei Schritten:

I. der Herstellung einer partikulären, kristallinen Vorläuferverbindung durch inniges Mischen der Ausgangsstoffe, Tempern in nicht oxidierender Atmosphäre sowie an schließendes Mahlen;

II. Tempern in oxidierender Atmosphäre, bei dem aus der partikulären, kristallinen Spinellvorläuferverbindung die erfindungsgemäße glatte, hochkristalline Lithium manganoxidinterkalationsverbindung mit Spinellstruktur erhalten wird.

Nachfolgend wird die Synthese eines Lithiummanganoxids mit der erfindungsgemäßen Morphologie nach dem erfindungsgemäßen Verfahren beschrieben:

1.1. Mischen der Einsatzstoffe $Li_2CO_3$ und Manganoxid $Mn_3O_4$. Als Einsatzstoffe für die Herstellung des erfindungsgemäßen Lithiummanganoxids sind auch verschiedene andere bekannte Mangan- und Lithiumverbindungen geeignet, z.B. $Li_2O_2$, $Mn_2O_3$ oder $MnO_2$ oder Mischungen aus Lithiumoxiden oder Manganoxiden, solange das Gemisch genügend aktiven Sauerstoff enthält. Als Manganverbindung ist $Mn_3O_4$ und als Lithiumverbindung $Li_2CO_3$ bevorzugt. Der aktive Sauerstoff fördert die Verbindung von Lithium mit Mangan beim Brennen. Die Menge (Anzahl Äquivalente) an aktivem Sauerstoff muß mindestens so groß sein wie die Anzahl der Lithiumatome. Aktiver Sauerstoff kann durch die Manganverbindung eingebracht werden, sofern die Manganwertigkeit größer als 2 ist. Jede Mn-Wertigkeit größer als 2 liefert ein Äquivalent aktiven Sauerstoff, jede Mn-Wertigkeit größer als 3 liefert zwei Äquivalente aktiven Sauerstoff, usw. Aktiver Sauerstoff kann auch durch die Lithiumverbindung eingebracht werden, wobei jede formale Li-Wertigkeit größer als 1 (z.B. $Li_2O_2$) ein Äquivalent aktiven Sauerstoff liefert. Der Mischvorgang dauert im allgemeinen zwischen 10 und 60 Minuten, bevorzugt jedoch 15 bis 45 Minuten. Als Mischer sind dabei alle gebräuchlichen Mischertypen einsetzbar, bevorzugt Mischer mit eingebauten Mahlwerkzeugen.

1.2. Temperung der Mischung in nicht oxidierender Atmosphäre, zweckmäßigerweise in einem Drehrohrofen, bevorzugt unter $N_2$, Argon oder einem anderen im wesentlichen sauerstofffreien Gas bei 600°C -1000 °C mit einer Verweilzeit von 15 bis 120 min. Die Temperung findet bevorzugt unter Stickstoff mit einer Temperatur von 700°C bis 900 °C und einer Verweilzeit von 30 bis 90 Minuten statt. Bei dieser Temperung werden die Verfahrensbedingungen so eingestellt, daß ausschließlich die drei Phasen MnO, $LiMnO_2$ und $Mn_3O_4$ entstehen. Eine nicht oxidierende Atmosphäre kann auch durch die Einstellung sauerstoffabspaltender Reaktionsbedingungen, also Reaktionsbedingungen, unter denen der Sauerstoffgehalt der eingesetzten Mischung abnimmt, erhalten werden.

1.3. Mahlung der getemperten Mischung, bis ein feinteiliges Gemisch erhalten wird. Als geeignete Mühlen seien hier beispielsweise Stiftmühlen, Pralltellermühlen, Universalmühlen, Strahlmühlen o. ä., gegebenenfalls mit Sichtung, genannt. Es können auch mehrere Mahlprozesse hintereinander in gleichen oder verschiedenen Mühlen ausgeführt werden

1.4. Optionaler zusätzlicher Arbeitsschritt: erneute Temperung wie in Punkt 1.2, wobei die Temperatur gleich oder höher sein kann als in Punkt 1.2, jedoch nicht höher als 1000°C und bevorzugt nicht höher als 950°C ist. Die Verweilzeit liegt ebenfalls bei 15 bis 120 Minuten.

1.5. Optionaler zusätzlicher Arbeitsschritt: erneute Mahlung wie in Punkt 1.3, wobei die gleiche oder eine andere Mühle als bei 1.3 gewählt werden kann und gleiche oder von 1.3 verschiedene Korngrößen und Korngrößenverteilungen erzielt werden.

2. Temperung der partikulären, kristallinen Spinellvorläuferverbindung unter einer oxidierenden Atmosphäre bei 500°C - 800 °C mit einer Verweilzeit von 0,5 bis 10 Stunden. Die Temperung kann dabei in einem Drehrohrofen bevorzugt bei 700°C bis 800°C und - falls der Ofen mit mehreren Heizzonen ausgestattet ist - einer in der letzten Heizzone abgesenkten Temperatur von 450°C -750 °C ausgeführt werden. Die Verweilzeit in der Heizzone beträgt bevorzugt 0,5-6 Stunden. Die oxidierende Atmosphäre wird bevorzugt mit Sauerstoff erzeugt. Die Temperung kann ebenso in einem stationären Ofen unter einer oxidierenden Atmosphäre bei einer bevorzugten Temperatur von 650°C bis 750 °C mit einer Verweilzeit von bevorzugt mehr als 5 Stunden erfolgen. Auch hier wird die oxidierende Atmosphäre bevorzugt mit Sauerstoff erzeugt.

3. Optionaler zusätzlicher Arbeitsschritt: Suspendieren der Lithiummanganoxidinterkalationsverbindung mit Spinellstruktur unter Zusatz eines oder mehrerer alkalischer Lithiumsalze in Wasser und anschließendes Sprühtrocknen bei Temperaturen von 100°C bis 400 °C. Geeignete alkalische Aluminiumsalze sind z.B. $Li_2CO_3$, $Li_2O_2$, $LiNO_3$, $LiOH$ oder Gemische aus zwei oder mehreren davon. Bevorzugt wird $Li_2CO_3$ eingesetzt. Der Sprühtrocknung kann sich eine Nachtrocknung bei Temperaturen von 100°C bis 300°C anschließen.

Zur Erleichterung der Sinterung kann in den Arbeitsschritten 1.1 bis 2 ein Sinterhilfsmittel in einer Konzentration von 0,1 bis 3 Gew.%, bezogen auf den Feststoffgehalt, hinzugefügt werden. Die Zugabe des Sinterhilfsmittels erfolgt dabei vorzugsweise bei der Herstellung der Mischung, Schritt 1.1. Als Sinterhilfsmittel wird vorzugsweise ein Boroxid, und besonders bevorzugt $H_3BO_3$, eingesetzt.

Dünnfilmelektroden, welche die nach dem erfindungsgemäßen Verfahren hergestellten Lithiummanganoxidverbindungen enthalten, können wie folgt hergestellt werden:

Es wird eine Mischung aus dem erfindungsgemäßen Pigment, Leitruß mit einer Oberfläche von mehr als 50 m2/g, Graphit und einem fluorhaltigen Bindemittel sowie flüchtigen Lösungsmitteln, wie z.B. N-Methylpyrrolidon (NMP) und/oder Aceton, hergestellt. Im allgemeinen werden folgende Mengen eingesetzt: Pigment: 80 Gewichtsteile, Leitruß und Graphit: 5-15 Gewichtsteile, Bindemittel: 5-15 Gewichtsteile. Die Lösungsmittelmenge wird so gewählt, daß die Mischung versprüht, vergossen oder gerakelt werden kann.

Die Mischung wird in einem oder in mehreren Arbeitsgängen auf einen elektrisch leitenden Ableiter aufgebracht und das Lösungsmittel verdampft. Die aufgebrachte Schicht kann durch bekannte Verfahren, wie Walzen oder Pressen, verdichtet werden.

Zur Herstellung einer sekundären Lithiumionenbatterie wird eine nach dem oben beschriebenen Verfahren hergestellte Dünnfilmelektrode als Kathode verwendet, während als Anode eine Lithiummetallelektrode oder eine Dünnfilmelektrode eingesetzt wird, welche aus Graphit, Kohlenstoff oder einem anderen zur Aufnahme von Lithiumelektronen fähigen Material und einem geeigneten Bindemittel besteht. Diese Elektroden werden zusammen mit einem Separator und einem Elektrolyten sowie gegebenenfalls weiteren Bestandteilen in einem Gehäuse zu einer Sekundärbatterie zusammengesetzt und geladen. Derart hergestellte sekundäre Lithiumionenbatterien weisen hervorragende Gebrauchseigenschaften auf.

Die nach dem erfindungsgemäßen Verfahren hergestellten Lithiummanganoxidinterkalationsverbindungen weisen die in Anspruch 1 beschriebene Morphologie auf. Sie lassen sich vorteilhaft zur Herstellung von besonders dünnen Dünnfilmelektroden verwenden. Sekundäre Lithiumionenbatterien, die die erfindungsgemäßen Lithiummanganoxidspinelle als aktives Material der positiven Elektrode enthalten, sind insbesondere als Hochleistungsbatterien hervorragend geeignet.

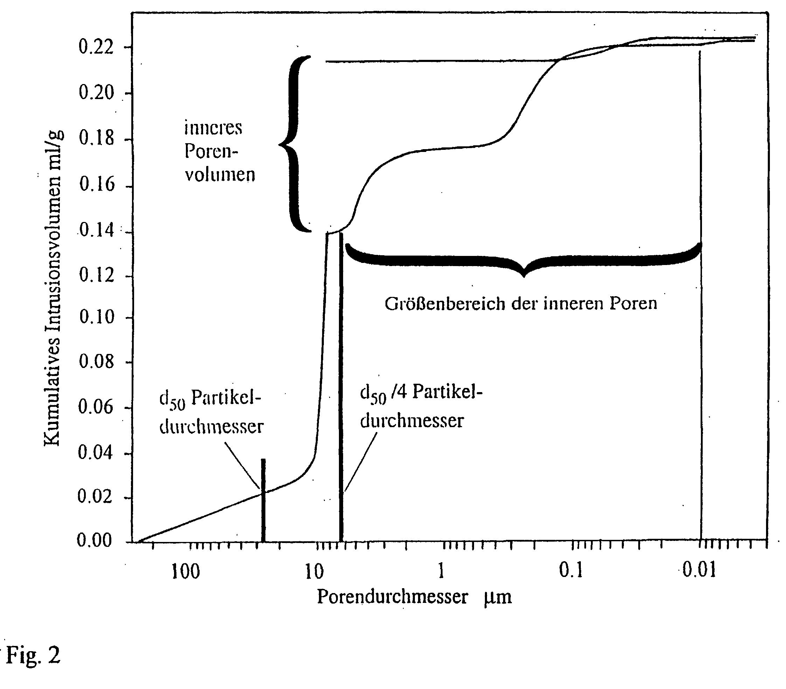

Die Erfindung soll nachfolgend anhand der Figuren 1 bis 3 sowie eines Beispiels genauer beschrieben werden, ist jedoch nicht auf diese beschränkt.

Fig.1 zeigt den Größenbereich der inneren Poren und das innere Porenvolumen für einen Li/Mn-Spinell gemäß des Erfindungsbeispiels

Fig.2 zeigt den Größenbereich der inneren Poren und das innere Porenvolumen eines handelsüblichen Li/Mn-Spinells mit einer spezifischen Oberfläche von 1,2 m2/g

Fig.3 zeigt das Röntgendiffraktogramm der Spinellvorläufgerverbindung gemäß der vorliegenden Erfindung

Erfindungsbeispiel: Herstellung eines Li/Mn-Spinells

1.1 Mischen

In einem Trommelmischer mit 3 Messerköpfen (2 m3 Inhalt, Firma Lödige) werden 712 kg Manganoxid ($Mn_3O_4$ der Firma Fermac, Ludwigshafen, nach Mahlung in einer Stiftmühle 250 Z der Firma Alpine) und 184,5 kg Lithiumcarbonat (kleiner 40 μm gemahlene Ware der Firma Chemetall, Frankfurt) in 30 Minuten gemischt. An der Mischung wurden folgende Meßwerte erhalten: Schüttdichte: 0,7 g/ml, Stampfdichte: 1,3 g/ml, spezifische Oberfläche: 12 $m^2$/g.

1.2. und 1.3. Temperung unter $N_2$ und Mahlung

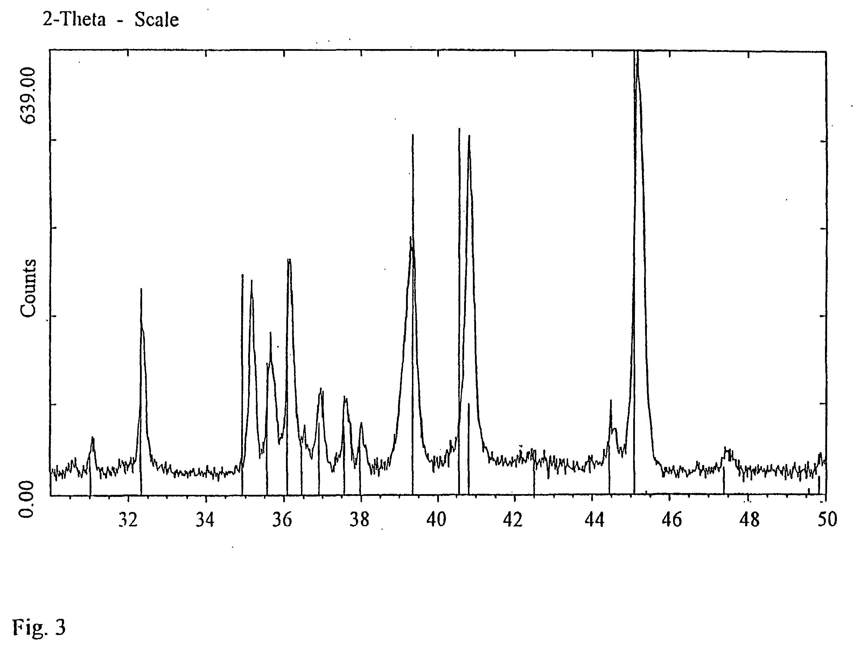

Die Mischung aus 1.1 wurde in einem gasbeheizten Drehrohrofen (Firma Elino, 3,2 m Länge der Heizzone, 300 mm Durchmesser) getempert. Die Brenntemperatur betrug 750±10 °C. Durch das Rohr wurden 11 $m^3$ Stickstoff pro Stunde im Gleichstrom geleitet. Die Ofenatmosphäre wurde durch eine Taktschleuse am Rohrende gegen die Umgebungsluft geschützt, so daß der Sauerstoffgehalt im Drehrohr unter 1% sank. Die Mischung wurde mit ca. 30-40 kg/h in das Rohr dosiert. Das Rohr drehte sich mit 2 Umdrehungen pro Minute. Die Neigung des Rohres lag bei 0,5 Grad, so daß die Verweilzeit des Produkts in der Heizzone etwa 1 Stunde betrug. Ein Vorlauf von wenigen Kilogramm Produkt wurde verworfen. Anschließend wurden 500 kg Brennware gesammelt. Das Produkt wurde in einer Stiftmühle (250 Z Firma Alpine) gemahlen. Es wurden folgende Meßwerte erhalten: Schüttdichte: 0,8 g/ml, Stampfdichte: 1,0 g/ml, spezifische Oberfläche: 3 $m^2$/g. Etwa 6 Stunden nach Beginn der Synthese wurde am Rohrausgang eine Probe entnommen und röntgenographisch analysiert. Es wurden zahlreiche scharfe Beugungsreflexe gefunden (siehe Abbildung 3), die auf das Vorhandensein folgender kristalliner Phasen hinwiesen: $LiMnO_2$ (35-0749), MnO (7-0230) und $Mn_3O_4$ (24-0734). Es wurde keine Spinellphase beobachtet. Die in Klammem aufgeführten Ziffern zeigen die Zuordnung der Beugungsreflexe zu den Verbindungen der JCPDS-Datei. Der Kohlenstoffgehalt der Probe betrug 0,39 Gewichtsprozent, was auf eine weitgehend vollständige Zersetzung des eingesetzten $Li_2CO_3$, also auf weniger als 0,4%, hindeutete.

1.4 und 1.5. Temperung unter $N_2$ und Mahlung

Die gemahlene Brennware aus 1.3 wurde in dem gasbeheizten Drehrohrofen (siehe oben) erneut getempert. Die Brenntemperatur betrug 825°C. Durch das Rohr wurden 10±1 $m^3$/h Stickstoff im Gleichstrom durchgeleitet. Die Ofenatmosphäre wurde durch eine Taktschleuse am Rohrende gegen die Umgebungsluft geschützt, so daß der Sauerstoffgehalt im Drehrohr unter 1% lag. Die Mischung wurde mit ca. 25 kg/h in das Rohr dosiert. Das Rohr drehte sich mit 2 Umdrehungen pro Minute. Die Neigung des Rohres lag bei 0,5 Grad, so daß die Verweilzeit des Produkts in der Heizzone etwa 1 Stunde war. Ein Vorlauf von wenigen Kilogramm Produkt wurde verworfen. Anschließend wurden 169,5 kg Brennware gesammelt. Das Produkt wurde in einer Stiftmühle (250 Z Firma Alpine) gemahlen. Es wurden folgende Meßwerte erhalten: Schüttdichte: 0,8 g/ml, Stampfdichte: 1,4 g/ml, spezifische Oberfläche: 1,1 $m^2$/g.

1.5.1. Wiederholung der Mahlung

Da das Produkt aus 1.5 noch geringfügig kratzende Anteile enthielt, wurde die Mahlung einer Teilmenge von 54 kg in einer Mühle mit Sichterrad (Typ ZPS 50, Firma Alpine) wiederholt. Die Mühlenrotordrehzahl lag bei 15000 U.p.M., das Sichterrad drehte sich mit 4000 U.p.M. Es wurden folgende Meßwerte der sichtergemahlenen Ware erhalten: Schüttdichte: 1,0 g/ml, Stampfdichte: 1,3 g/ml, spezifische Oberfläche: 1,4 $m^2$/g. Die Teilchengrößenverteilung war folgendermaßen: $d_{10}$ =1,0 µm, $d_{50}$ = 3,0 µm, $d_{90}$ = 14 µm.

2. Temperung unter einer oxidierenden Atmosphäre

Eine Menge von 40 kg der gemahlenen Brennware aus 1.5.1 wurde in einem elektrisch beheizten Drehrohrofen getempert. Das Pulver wurde mit ca. 5,4 kg/h in das Rohr dosiert. Die Brenntemperatur betrug 775°C (Länge der Heizzone 140 cm). Durch das Rohr (Durchmesser 25 cm) wurden 0,6 $m^3$ pro Stunde Sauerstoff im Gleichstrom geleitet. Das Rohr drehte sich mit 4/3 Umdrehungen pro Minute und wurde jede Viertel-Umdrehung eine Minute lang angehalten, so daß die Verweilzeit des Produkts in der Heizzone etwa 3,3 Stunden erreichte. Die Neigung des Rohres lag bei 0,25 Grad. Es wurden 28,9 kg Lithiummanganoxidspinell hergestellt. Folgende Meßwerte wurden erhalten: Schüttdichte: 1,0 g/ml, Stampfdichte: 1,1 g/ml, spezifische Oberfläche: 0,7 $m^2$/g, pH: 8,5, Teilchengrößenverteilung: $d_{10}$ =2,7 µm, $d_{50}$ = 7 µm, $d_{90}$ = 23 µm. Die röntgendiffraktommetrische Untersuchung zeigte das Diffraktogramm eines phasenreinen Li/Mn-Spinells (analog JCPDS 35-0782) und ergab eine Kristallitgröße von 0,5 µm, erkennbar an scharfen, auch bei 36 Grad teilweise aufgespaltenen Beugungsreflexen. Es wurde die Pulverladung bestimmt und bei der 5. Entladung ( Lithium-Einlagerung) ein Wert von 108 Ah/kg gefunden.

3. Suspendieren und Sprühtrocknen mit $Li_2CO_3$

Es wurde eine Suspension von 10 kg der Brennware aus 2., 10 Liter Wasser und 100 g Lithiumcarbonat mit einem Kotthof-Dispergieraggregat in einem Behälter gerührt und in einem Sprühtrockner (Firma Niro, Typ Minor) unter Verwendung eines Zerstäuberrades getrocknet. Die Heizgastemperatur betrug 350±5 °C, die Abgastemperatur lag bei 130±5 °C. Der Zerstäubergasdruck betrug 4,6 bar. Es wurden 8,9 kg Li/Mn-Spinell mit $Li_2CO_3$-Schicht erhalten. Die Teilchengrößenverteilung war folgendermaßen: $d_{10}$ =2,3 µm, $d_{50}$ = 5 µm, $d_{90}$ = 15 µm, spezifische Oberfläche: 0,9 $m^2$/g. Zuletzt wurde das Pulver 1 Stunde in einem Vakuumtrockenschrank (Wasserstrahlvakuum) bei 110 °C getrocknet.

Zusätzlich wurde die Porengrößenverteilung mit der Quecksilberporosimetriemethode bestimmt. Es waren Interporen (d.h. Poren zwischen nicht miteinander verbundenen Teilchen) der Größe 1-4 µm erkennbar. Das inkrementelle Intrusionsvolumen erreichte bei 3 µm Porengröße ein lokales Maximum von 0,045 ml/g. Im Bereich von 0,02 bis 1 µm wurden keine Poren beobachtet. Es wurden die Pulverladungsdaten bestimmt und bei der 5. Entladung ein Wert von 106 Ah/kg gefunden.

Analytische Untersuchungen:

1.Porengrößenverteilung:

Die Porengrößenverteilung im Porengrößenbereich zwischen 0,01 und 100 µm wurde mit der Quecksilberporosimetriemethode mit einem Autopore II Gerät (nach DIN 66133) bestimmt. Mit dieser Methode können innere Poren, also die Poren innerhalb zusammenhängender Teilchen sowie die sich aus der Oberflächenrauhigkeit ergebenden Poren, und Interporen, also die Poren zwischen verschiedenen nicht miteinander verbundenen Teilchen, erfaßt werden. Es werden auch Poren größer als 50 µm, die sich aus der lockeren Schüttung eines Pulvers ergeben, erfaßt.

2. Spezifische Oberfläche:

Die spezifische Oberfläche (BET) wurde mit einem Ströhlein-Areameter der Firma Ströhlein, Düsseldorf, nach dem Einpunkt-Differenz-Verfahren nach Haul und Dümbgen in Anlehnung an DIN 66131 bestimmt. Die Trocknung der Pigmente erfolgte bei 140 °C während mindestens 12 Stunden.

3. Röntgendiffraktogramme:

Röntgendiffraktogramme wurden mit dem Difraktometer D5000 der Fa. AXS erhalten. Die Kristallitgröße wurde aus der integralen Halbwertsbreite des 311 Peaks unter Verwendung der Debye Scherrer Formel und unter Berücksichtigung der üblichen Korrektur für die Apparateverbreiterung berechnet.

4. Teilchengrößenverteilung:

Die Teilchengrößenverteilung wurde per Laserbeugung in einem SYMPATEC HELOS Gerät bestimmt. Dabei wurde eine Spatelspitze des zu untersuchenden Pulvers in das zirkulierende Wasserbad gegeben (optische Konzentration: ca. 15-50%). Die Teilchen wurden 50 Sekunden vor und während der 10 Sekunden dauernden Messung mit Ultraschall verteilt. Bei dieser Messung wird im wesentlichen der Durchmesser der zusammenhängenden Agglomerate erfaßt.

5. Pulverladungsdaten:

Die Pulverladungsdaten wurden folgendermaßen bestimmt: Zunächst wurden Hilfsstoffe in einer Mühle gemischt: 1 g Ruß (z.B. Vulcan XC-72 oder Ensaco 250) plus 1 g Graphit (SFG 10) plus 2,2 g PVDF (Aldrich). Mit einem Schnellrührer wurde ein Lack aus 2 g Spinell und 0,4 g Hilfsstoffen in NMP (N-Methylpyrrolidon) gerührt. Zur Herstellung der zu prüfenden Schicht wurde der Lack in bis zu 4 Wiederholungsgängen auf den jeweils vorgetrockneten und leicht erwärmten Titan-Ableiter gesprüht. Die Fläche des Stromableiters betrug 1,3 cm$^2$. Zwischendurch wurde der Lack jedesmal mit dem Schnellrührer homogenisiert und sofort weiterverarbeitet, um einer möglichen Entmischung der Feststoffe entgegenzuwirken. Der Lack wurde mit Hilfe einer Sprühpistole (air brush Sprühpistole) auf den vorgewärmten Titanableiter gesprüht und getrocknet. Der für die Reproduzierbarkeit und Richtigkeit der Messung kritischste Schritt war die Wägung der getrockneten Schicht auf dem Ti-Ableiter. Die Schicht wog etwa 25 mg; sie wurde mit 0,1 mg Auflösung gewogen, entsprechend einem Fehler von 0,4%, bei Differenzwägung maximal 0,8%, im Mittel jedoch weniger.

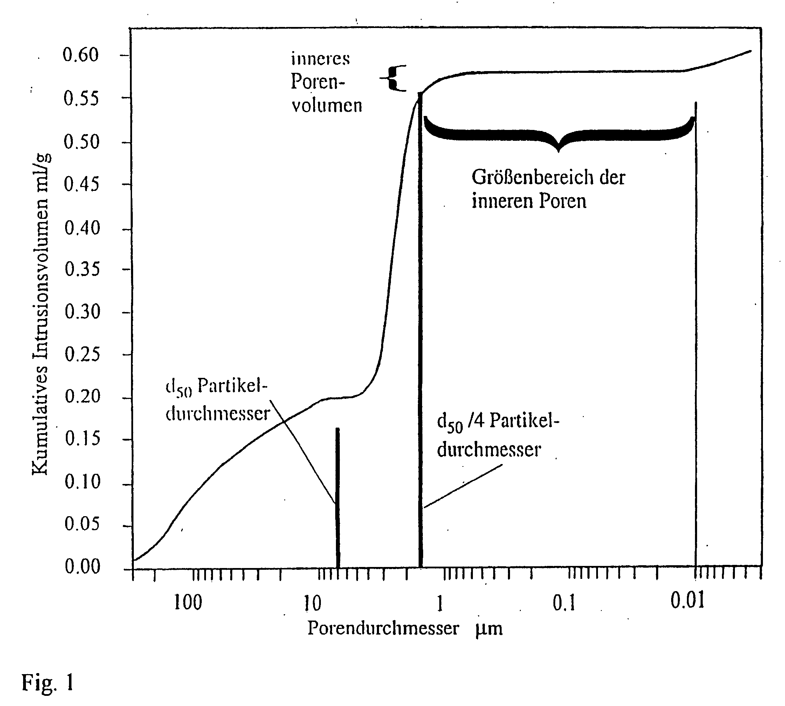

Die Elektroden wurden im Ölpumpenvakuum bei 120°C mindestens 12 Stunden lang getrocknet, bevor sie in einem mit Argon gefüllten Handschuhkasten zu einer elektrochemischen Zelle zusammengebaut wurden. Als Anode wurde Lithiummetall (Aldrich, 99,9%, 0,75 mm Dicke) verwendet und weiterhin wurde die handelsübliche Elektrolytlösung LP 30 (1 M LiPF$_6$ in Ethylencarbonat/ Dimethylcarbonat 1:1, Fa. Merck) verwendet. Der Separator war ein Glasflies von ca. 2 mm Dicke. Die Geometrie der Ladungsmeßzellen ist beschrieben in P. Novák, W. Scheifele, F. Joho, O. Haas, *J. Electrochem. Soc.* 142, 2544 (1995), siehe dort insbesondere Abbildung 1 (es wurde jedoch ohne die dort gezeigte Referenzelektrode gearbeitet).

Die Ladungen und Entladungen erfolgten im Potentialbereich zwischen 3,3 und 4,4 Volt mit konstanten Strömen von 10 µA pro Milligramm Oxid, was zu Lade- und Entladedauern in der Größenordnung von jeweils über 10 Stunden führte.

6. Verfahren zur Bestimmung des Porenvolumens

Das Porenvolumen wurde wie folgt bestimmt: Die Porengrößenverteilung im Porengrößenbereich zwischen 0,01 und 100 µm wurde mit der Quecksilberporosimetriemethode mit einem Autopore II Gerät (nach DIN 66133) bestimmt.

**Patentansprüche**

1. Lithiummanganoxid enthaltende Lithiuminterkalationsverbindungen mit Spinellstruktur für Dünnfilmelektroden, wobei die Lithiuminterkalationsverbindungen

   - eine gemäß der BET-Methode bestimmte spezifische Oberfläche von 0,3 bis 5 $m^2/g$,

- eine am $d_{50}$-Wert bestimmte Teilchengröße von größer als 0,5 μm,

- einen am $d_{90}$-Wert bestimmten Durchmesser von 30 μm oder kleiner sowie ein inneres Porenvolumen von kleiner als 0,05 ml/g aufweisen und eine ausgeprägte Kristallstruktur besitzen.

2. Lithiummanganoxid enthaltende Lithiuminterkalationsverbindungen mit Spinellstruktur gemäß Anspruch 1, wobei das innere Porenvolumen kleiner als 0,03 ml/g ist.

3. Lithiummanganoxid enthaltende Lithiuminterkalationsverbindungen mit Spinellstruktur gemäß den Ansprüchen 1 und 2, wobei die spezifische BET-Oberfläche 0,5 bis 1,9 $m^2/g$ beträgt.

4. Lithiummanganoxid enthaltende Lithiuminterkalationsverbindungen mit Spinellstruktur gemäß den Ansprüchen 1 und 2, wobei die spezifische BET-Oberfläche 0,6 bis 1,5 $m^2/g$ beträgt.

5. Lithiummanganoxid enthaltende Lithiuminterkalationsverbindungen mit Spinellstruktur gemäß den Ansprüchen 1 bis 4, wobei die am $d_{50}$-Wert bestimmte Teilchengröße größer als 1 μm ist.

6. Lithiummanganoxid enthaltende Lithiuminterkalationsverbindungen mit Spinellstruktur gemäß den Ansprüchen 1 bis 5, wobei der am $d_{90}$-Wert bestimmte Durchmesser kleiner als 25 μm ist.

7. Lithiummanganoxid enthaltende Lithiuminterkalationsverbindungen mit Spinellstruktur gemäß den Ansprüchen 1 bis 5, wobei der am $d_{90}$-Wert bestimmte Durchmesser kleiner als 20 μm ist.

8. Verfahren zur Herstellung von Lithiummanganoxid enthaltenden Lithiuminterkalationsverbindungen mit Spinellstruktur gemäß Anspruch 1, durch

a) Herstellen eines innigen Gemisches aus einer oder mehreren Lithiumverbin dungen und einer oder mehreren Manganverbindungen, wobei mindestens eine dieser Verbindungen oder die Summe aus allen Verbindungen soviel aktiven Sauerstoff enthält, daß die Anzahl der Äquivalente an aktivem Sauerstoff gleich oder größer der Anzahl der Lithiumatome ist, sowie Tempern bei 600°C bis 1000°C in nicht oxidierender Atmosphäre und nachfolgendes Mahlen, wobei eine partikuläre, kristalline Spinellvorläuferverbindung erhalten wird;

b) Tempem der kristallinen Spinellvorläuferverbindung in oxidierender Atmo sphäre bei 500 °C bis 800 °C mit einer Verweilzeit von 0,5 bis 10 Stunden.

9. Verfahren zur Herstellung von Lithiummanganoxid enthaltenden Lithiuminterkalationsverbindungen mit Spinellstruktur gemäß Anspruch 1, durch

a)

a1) Herstellen eines innigen Gemisches aus $Li_2O_3$ und $Mn_3O_4$,

a2) Tempem bei 600°C bis 1000°C unter Stickstoff, Argon oder einer anderen nicht oxidierenden Atmosphäre mit einer Verweilzeit von 15 bis 120 Minuten in einem Drehrohrofen,

a3) Mahlen des getemperten Gemisches zu einer partikulären, kristalli nen Spinellvorläuferverbindung;

b) Tempern der Spinellvorläuferverbindung in oxidierender Atmosphäre bei 500°C bis 800 °C mit einer Verweilzeit von 0,5 bis 10 Stunden.

10. Verfahren zur Herstellung von Lithiummanganoxid enthaltenden Lithiuminterkalationsverbindungen mit Spinellstruktur gemäß Anspruch 9, wobei das Tempern gemäß a2) sowie das Mahlen gemäß a3) zwei- oder mehrfach ausgeführt werden.

11. Verfahren zur Herstellung von Lithiummanganoxid enthaltenden Lithiuminterkalationsverbindungen mit Spinellstruktur gemäß den Ansprüchen 8 bis 10, wobei die partikuläre kristalline Spinellvorläuferverbindung aus den drei Phasen MnO, $LiMnO_2$ und $Mn_3O_4$ besteht.

12. Verfahren zur Herstellung von Lithiummanganoxid enthaltenden Lithiuminterkalationsverbindungen mit Spinellstruktur gemäß Anspruch 9, wobei das Tempem in oxidierender Atmosphäre in einem Drehrohrofen bei einer Temperatur von 700 °C bis 800 °C mit einer Verweilzeit von 0,5 bis 6 Stunden ausgeführt wird.

13. Verfahren zur Herstellung von Lithiummanganoxid enthaltenden Lithiuminterkalationsverbindungen mit Spinellstruktur gemäß Anspruch 9, wobei das Tempern in oxidierender Atmosphäre in einem stationären Ofen bei einer Temperatur von 650 °C bis 750°C mit einer Verweilzeit von mehr als 5 Stunden ausgeführt wird.

14. Verfahren nach einem der Ansprüche 8 bis 13, wobei nach dem Tempem in oxidierender Atmosphäre der erhaltene Feststoff in Wasser unter Zusatz einer oder mehrerer alkalischer Lithiumverbindungen suspendiert und die Suspension bei einer Temperatur von 100 °C bis 400 °C sprühgetrocknet wird.

15. Verfahren nach Anspruch 14, wobei die alkalische Lithiumverbindung $Li_2CO_3$, $Li_2O_2$, $LiNO_3$, LiOH oder ein Gemisch aus zwei oder mehreren dieser Verbindungen ist.

16. Verfahren nach einem der Ansprüche 8 bis 15, wobei das innige Vermischen in Gegenwart eines Sinterhilfsmittels mit einer Konzentration von 0,1 bis 3%, bezogen auf das Gewicht der eingesetzten Feststoffe, ausgeführt wird.

17. Verfahren nach Anspruch 16, wobei das Sinterhilfsmittel ein Boroxid ist.

18. Verfahren nach Anspruch 17, wobei das Boroxid $H_3BO_3$ ist.

19. Dünnfilmelektrode für sekundäre Lithiumionenbatterien, enthaltend Lithiummanganoxid gemäß Anspruch 1 als aktives Material.

20. Sekundäre Lithiumionenbatterie, enthaltend Lithiummanganoxid gemäß Anspruch 1 als aktives Material der positiven Elektrode.

**Claims**

1. A lithium manganese oxide-containing lithium intercalation compound of spinel structure for thin-film electrodes, where the lithium intercalation compound has

    - a specific surface area, determined by the BET method, of from 0.3 to 5 $m^2$/g,
    - a particle size, determined from the $d_{50}$ value, of greater than 0.5 μm,
    - a diameter, determined from the $d_{90}$ value, of 30 μm or smaller and an inner pore volume of smaller than 0.5 ml/g, and possesses a pronounced crystalline structure.

2. A lithium manganese oxide-containing lithium intercalation compound of spinel structure as claimed in claim 1, where the inner pore volume is smaller than 0.03 ml/g.

3. A lithium manganese oxide-containing lithium intercalation compound of spinel structure as claimed in claim 1 or 2, where the specific BET surface area is from 0.5 to 1.9 $m^2$/g.

4. A lithium manganese oxide-containing lithium intercalation compound of spinel structure as claimed in claim 1 or 2, where the specific BET surface area is from 0.6 to 1.5 $m^2$/g.

5. A lithium manganese oxide-containing lithium intercalation compound of spinel structure as claimed in any of claims 1 to 4, where the particle size, determined from the $d_{50}$ value, is greater than 1 μm.

6. A lithium manganese oxide-containing lithium intercalation compound of spinel structure as claimed in any of claims 1 to 5, where the diameter, determined from the $d_{90}$ value, is smaller than 25 μm.

7. A lithium manganese oxide-containing lithium intercalation compound of spinel structure as claimed in any of claims 1 to 5, where the diameter, determined from the $d_{90}$ value, is smaller than 20 μm.

8. A process for the preparation of lithium manganese oxide-containing lithium intercalation compounds of spinel structure as claimed in claim 1, by

    a) preparation of an intimate mixture of one or more lithium compounds and one or more manganese compounds, where at least one of these compounds or the sum of all compounds contains sufficient active oxygen that the number of equivalents of active oxygen is equal to or greater than the number of lithium atoms, and also heating at from 600°C to 1 000°C in a nonoxidizing atmosphere and subsequent grinding, to obtain a particulate, crystalline spinel precursor compound;
    b) heating the crystalline spinel precursor compound in an oxidizing atmosphere at from 500°C to 800°C and a residence time of from 0.5 to 10 hours.

9. A process for the preparation of lithium manganese oxide-containing lithium intercalation compounds of spinel structure as claimed in claim 1, by

    a)

        a1) preparation of an intimate mixture of $Li_2O_3$ and $Mn_3O_4$,

        a2) heating at from 600°C to 1 000°C under nitrogen, argon or some other nonoxidizing atmosphere and a residence time of from 15 to 120 minutes in a rotary tube furnace,

        a3) grinding the heated mixture to give a particulate, crystalline spinel precursor compound;

    b) heating the spinel precursor compound in an oxidizing atmosphere at from 500°C to 800°C and a residence time of from 0.5 to 10 hours.

**10.** A process for the preparation of lithium manganese oxide-containing lithium intercalation compounds of spinel structure as claimed in claim 9, where the heating in a2) and the grinding in a3) are carried out twice or more.

**11.** A process for the preparation of lithium manganese oxide-containing lithium intercalation compounds of spinel structure as claimed in any of claims 8 to 10, where the particulate crystalline spinel precursor compound consists of the three phases MnO, $LiMnO_2$ and $Mn_3O_4$.

**12.** A process for the preparation of lithium manganese oxide-containing lithium intercalation compounds of spinel structure as claimed in claim 9, where the heating in an oxidizing atmosphere is carried out in a rotary tube furnace at a temperature of from 700°C to 800°C and a residence time of from 0.5 to 6 hours.

**13.** A process for the preparation of lithium manganese oxide-containing lithium intercalation compounds of spinel structure as claimed in claim 9, where the heating in an oxidizing atmosphere is carried out in a stationary furnace at a temperature of from 650°C to 750°C and a residence time of greater than 5 hours.

**14.** A process as claimed in any of claims 8 to 13, where, after the heating in an oxidizing atmosphere, the resultant solid is suspended in water with addition of one or more alkaline lithium compounds, and the suspension is spraydried at a temperature of from 100°C to 400°C.

**15.** A process as claimed in claim 14, where the alkaline lithium compound is $Li_2CO_3$, $Li_2O_2$, $LiNO_3$, LiOH or a mixture of two or more of these compounds.

**16.** A process as claimed in any of claims 8 to 15, where the intimate mixing is carried out in the presence of a sintering aid with a concentration of from 0.1 to 3%, based on the weight of the solids employed.

**17.** A process as claimed in claim 16, where the sintering aid is a boron oxide.

**18.** A process as claimed in claim 17, where the boron oxide is $H_3BO_3$.

**19.** A thin-film electrode for secondary lithium ion batteries, containing lithium manganese oxide as claimed in claim 1 as active material.

**20.** A secondary lithium ion battery containing lithium manganese oxide as claimed in claim 1 as active material of the positive electrode.

**Revendications**

**1.** Composés d'intercalation de lithium contenant de l'oxyde de lithium et de manganèse à structure spinelle pour des électrodes à film mince, les composés d'intercalation de lithium présentant

- une surface spécifique déterminée selon la méthode BET de 0,3 à 5 $m^2/g$,
- une taille de particules déterminée par la valeur $d_{50}$ supérieure à 0,5 µm,
- un diamètre déterminé par la valeur $d_{90}$ de 30 µm ou moins ainsi qu'un volume de pores interne inférieur à 0,05 ml/g, et possèdent une structure cristalline prononcée.

**2.** Composés d'intercalation de lithium contenant de l'oxyde de lithium et de manganèse à structure spinelle selon la revendication 1, le volume de pores interne étant inférieur à 0,03 ml/g.

**3.** Composés d'intercalation de lithium contenant de l'oxyde de lithium et de manganèse à structure spinelle selon les revendications 1 et 2, la surface spécifique BET étant de 0,5 à 1,9 $m^2/g$.

**4.** Composés d'intercalation de lithium contenant de l'oxyde de lithium et de manganèse à structure spinelle selon les revendications 1 et 2, la surface spécifique BET étant de 0,6 à 1,5 $m^2/g$.

**5.** Composés d'intercalation de lithium contenant de l'oxyde de lithium et de manganèse à structure spinelle selon les revendications 1 à 4, la taille des particules déterminée par la valeur $d_{50}$ étant supérieure à 1 µm.

**6.** Composés d'intercalation de lithium contenant de l'oxyde de lithium et de manganèse à structure spinelle selon les revendications 1 à 5, le diamètre déterminé par la valeur $d_{90}$ étant inférieur à 25 µm.

**7.** Composés d'intercalation de lithium contenant de l'oxyde de lithium et de manganèse à structure spinelle selon les revendications 1 à 5, le diamètre déterminé par la valeur $d_{90}$ étant inférieur à 20 µm.

**8.** Procédé pour la préparation de composés d'intercalation de lithium contenant de l'oxyde de lithium et de manganèse à structure spinelle selon la revendication 1, par

a) préparation d'un mélange intime d'un ou de plusieurs composés de lithium et d'un ou de plusieurs composés de manganèse, au moins un de ces composés ou la somme de tous les composés contenant une quantité d'oxygène actif telle que le nombre d'équivalents d'oxygène actif est identique ou supérieur au nombre d'atomes de lithium, et traitement thermique entre 600°C et 1 000°C dans une atmosphère non oxydante et broyage subséquent, ce par quoi on obtient un composé précurseur de spinelle cristallin particulaire ;

b) traitement thermique du composé précurseur de spinelle cristallin dans une atmosphère oxydante entre 500°C et 800°C avec un temps de séjour de 0,5 à 10 heures.

9. Procédé de préparation de composés d'intercalation de lithium contenant de l'oxyde de lithium et de manganèse à structure spinelle selon la revendication 1, par

a)

a1) préparation d'un mélange intime de $Li_2O_3$ et de $Mn_3O_4$,
a2) traitement thermique entre 600°C et 1 000°C sous azote, argon ou une autre atmosphère non oxydante avec un temps de séjour de 15 à 120 minutes dans un four tubulaire rotatif,
a3) broyage du mélange traité thermiquement pour donner lieu à un composé précurseur de spinelle cristallin particulaire ;

b) traitement thermique du composé précurseur de spinelle dans une atmosphère oxydante entre 500°C et 800°C avec un temps de séjour de 0,5 à 10 heures.

10. Procédé pour la préparation de composés d'intercalation de lithium contenant de l'oxyde de lithium et de manganèse à structure spinelle selon la revendication 9, le traitement thermique selon a2) ainsi que le broyage selon a3) étant exécutés deux ou plusieurs fois.

11. Procédé de préparation de composés d'intercalation de lithium contenant de l'oxyde de lithium et de manganèse à structure spinelle selon les revendications 8 à 10, le composé précurseur de spinelle cristallin particulaire étant constitué des trois phases MnO, $LiMnO_2$ et $Mn_3O_4$.

12. Procédé pour la préparation de composés d'intercalation de lithium contenant de l'oxyde de lithium et de manganèse à structure spinelle selon la revendication 9, le traitement thermique dans une atmosphère oxydante étant réalisé dans un four tubulaire rotatif à une température de 700°C jusqu'à 800°C avec un temps de séjour de 0,5 à 6 heures.

13. Procédé pour la préparation de composés d'intercalation de lithium contenant de l'oxyde de lithium et de manganèse à structure spinelle selon la revendication 9, le traitement thermique dans une atmosphère oxydante étant réalisé dans un four stationnaire à une température de 650°C jusqu'à 750°C avec un temps de séjour de plus de 5 heures.

14. Procédé selon l'une quelconque des revendications 8 à 13, la matière solide obtenue après le traitement thermique dans une atmosphère oxydante étant mise en suspension avec addition d'un ou de plusieurs composés alcalins du lithium et la suspension étant séchée par pulvérisation à une température de 100°C à 400°C.

15. Procédé selon la revendication 14, le composé alcalin du lithium étant $Li_2CO_3$, $Li_2O_2$, $LiNO_3$, LiOH ou un mélange de deux ou de plusieurs de ces composés.

16. Procédé selon l'une quelconque des revendications 8 à 15, le mélange intime étant réalisé en présence d'un adjuvant de frittage en une concentration de 0,1 à 3 % par rapport au poids des matières solides utilisées.

17. Procédé selon la revendication 16, l'adjuvant de frittage étant un oxyde de bore.

18. Procédé selon la revendication 17, l'oxyde de bore étant $H_3BO_3$.

19. Electrode à film mince pour batteries secondaires aux ions de lithium, contenant de l'oxyde de lithium et de manganèse selon la revendication 1 comme matériau actif.

20. Batterie secondaire aux ions de lithium, contenant de l'oxyde de lithium et de manganèse selon la revendication 1 comme matériau actif de l'électrode positive.

Fig. 1

EP 1 216 202 B1

Fig. 2

2-Theta - Scale

Fig. 3

EP 1 216 202 B1